# FASCICULE DE BREVET EUROPEEN

(11) **EP 0 621 000 B1**
(45) Date de publication et mention de la délivrance du brevet: **11.09.1996**
(21) Numéro de dépôt: 94400833.3
(22) Date de dépôt: 15.04.1994
(51) Int. Cl.: A47J 37/06

(54) **Appareil de cuisson à plaque de cuisson pourvue d'ouvertures**
Kochgerät mit einer gelochten Kochplatte
Cooking apparatus with a cooking surface provided with openings

(30) Priorité: 21.04.1993 FR 9304688
(43) Date de publication de la demande: 26.10.1994
(73) Titulaire: SEB S.A., F-69130 Ecully (FR)
(72) Inventeur: Rosset, Roger, F-74150 Bloye (FR)
(74) Mandataire: Keib, Gérard

(56) Documents cités:
- FR-A- 1 155 621
- GB-A- 1 151 852
- US-A- 2 253 834
- US-A- 4 432 274
- US-A- 5 117 747

## Description

La présente invention concerne un appareil de cuisson à plaque de cuisson pourvue d'ouvertures.

Elle concerne notamment des appareils de cuisson du type gril ou barbecue à gaz, que l'on peut utiliser sans désagréments à l'intérieur d'une maison.

Des appareils connus comportent verticalement, à l'arrière de la surface de cuisson, ou bien horizontalement, au-dessus de la surface de cuisson, des panneaux radiants permettant de chauffer la plaque de cuisson et de cuire les aliments. Ce type de construction est cependant très peu utilisé car il ne permet pas d'obtenir une bonne homogénéité de la cuisson.

D'autres appareils connus comportent une couche de pierres de lave qui est disposée entre les brûleurs ou la résistance, situés au fond d'une cuve, et la grille de cuisson. Les pierres de lave permettent d'homogénéiser la température de la grille de cuisson et de retenir une partie des graisses de cuisson qui s'écoulent des aliments à travers la grille de cuisson.

Cependant, ce dispositif ne permet pas d'empêcher les graisses de cuisson de tomber sur les brûleurs.

Des inflammations et des dégagements importants de substances toxiques, dus à la pyrolyse des graisses, ont lieu très fréquemment.

D'autres appareils ont été conçus afin d'éviter que les graisses ne tombent directement sur les éléments chauffants, et comportent des profilés métalliques qui canalisent les graisses et les acheminent à l'écart des éléments chauffants.

Cependant, ce type d'appareil est compliqué à fabriquer et coûteux puisqu'un profilé métallique doit être situé sous chaque ouverture de la plaque de cuisson pour recueillir les graisses. De plus, cette structure compliquée ne facilite pas le nettoyage de l'appareil et de la grille de cuisson.

Un tel appareil selon le préambule de la revendication 1 est décrit dans le brevet US 2 253 834. Des rampes de gaze sont disposées entre chaque ouverture de la grille de cuisson, entre deux profilés permettant de recueillir les graisses. Aussi, ces dernières sont-elles fortement chauffées lorsqu'elles s'écoulent de la plaque de cuisson et lorsqu'elles stagnent dans les profilés métalliques.

Des dégagements importants de fumée et des inflammations des graisses peuvent être fréquemment observés.

La présente invention a pour but de remédier aux inconvénients précités. Elle permet notamment d'obtenir un appareil de cuisson peu coûteux et présentant des conditions excellentes pour la cuisson des aliments à l'intérieur d'une maison et pour le nettoyage de la grille de cuisson.

L'appareil de cuisson visé par la présente invention comporte une plaque de cuisson métallique, amovible et pourvue d'ouvertures, des éléments chauffants montés sous la plaque de cuisson et un récipient de collecte des graisses de cuisson disposé sous la plaque de cuisson à l'intérieur du socle de l'appareil, la face inférieure de la plaque de cuisson comportant des logements de section transversale sensiblement en forme de "U" au-dessus des éléments chauffants, lesdites ouvertures ne débouchant pas à l'intérieur des logements.

Selon l'invention, l'appareil de cuisson est caractérisé en ce que lesdits logements reposent à leur partie inférieure sur une paroi métallique distincte des logements et sont adjacents aux bords de la plaque de cuisson, en ce que le récipient de collecte est interrompu à l'aplomb des logements et en ce que les éléments chauffants sont disposés à proximité de la paroi métallique, cette paroi comportant des ailes s'étendant vers le bas et solidaires du socle de cuisson.

Par conséquent, la chauffe de la plaque de cuisson est réalisée dans une zone distincte de la zone de cuisson pourvue des ouvertures.

La cuisson des aliments se fait donc hors de la zone de chauffe de la plaque.

Ainsi, toute possibilité de contact des graisses de cuisson avec l'élément chauffant est éliminée. Les risques d'inflammation des graisses sont donc inexistants et les aliments ne sont pas altérés par les produits de pyrolyse issus de la combustion des graisses.

L'appareil peut donc être utilisé à l'intérieur d'une maison et une cuisson des aliments, identique à celle obtenue traditionnellement sur un barbecue d'extérieur, peut être réalisée sans nuisance dans une salle à manger.

La chauffe de la plaque de cuisson est réalisée principalement par conduction de la chaleur, à partir des logements, vers la zone de cuisson des aliments.

L'appareil de cuisson comporte une plaque de cuisson amovible qui peut être séparée du reste de l'appareil et des éléments chauffants, ce qui permet un nettoyage facile en toute sécurité de la plaque de cuisson.

Selon une version préférée de l'invention, les éléments chauffants sont montés sous la paroi métallique et s'étendent dans la direction longitudinale de l'appareil, ladite paroi comportant une ouverture au-dessus des éléments chauffants.

Ainsi, le logement forme une cavité sensiblement fermée dans laquelle l'air, chauffé par l'élément chauffant, permet une montée très rapide en température de la plaques de cuisson.

Selon une version préférée de l'invention, les éléments chauffants sont des rampes à gaz.

Ainsi, les brûleurs à gaze sont isolés des aliments et les gaz de combustion s'échappant des rampes à gaz sont canalisés à l'intérieur des logements et sont évacués au centre de l'appareil.

Selon une version avantageuse de l'invention, la face inférieure de la plaque de cuisson comporte en outre des nervures s'étendant entre le logement et la face inférieure de la plaque de cuisson.

Ces nervures conduisent la chaleur et permettent d'homogénéiser la température de la plaque de cuisson afin d'obtenir une cuisson uniforme des aliments sur toute la surface de cuisson.

Selon une autre version avantageuse de l'invention, les logements sont adjacents aux bords de la plaque et au moins une ouverture existe entre ladite paroi métallique et une paroi des logements. L'air peut donc circuler facilement entre la partie inférieure du logement et la paroi métallique sur laquelle repose le logement. Ces arrivées d'air secondaire permettent d'améliorer le fonctionnement des brûleurs et d'accroître le rendement thermique de l'appareil.

De plus, l'air chauffé dans le logement se propage sous la plaque de cuisson et contribue à augmenter la température de la plaque de cuisson. Le rendement thermique de l'appareil est donc excellent

D'autres particularités et avantages de l'invention apparaîtront encore dans la description ci-après. Aux dessins annexés, donnés à titre d'exemples non limitatifs:
- la figure 1 est une vue en perspective de l'appareil de cuisson selon l'invention;
- la figure 2 est une vue en coupe selon II-II à la figure 1 ;
- la figure 3 est une vue en coupe partielle d'une réalisation de l'invention.

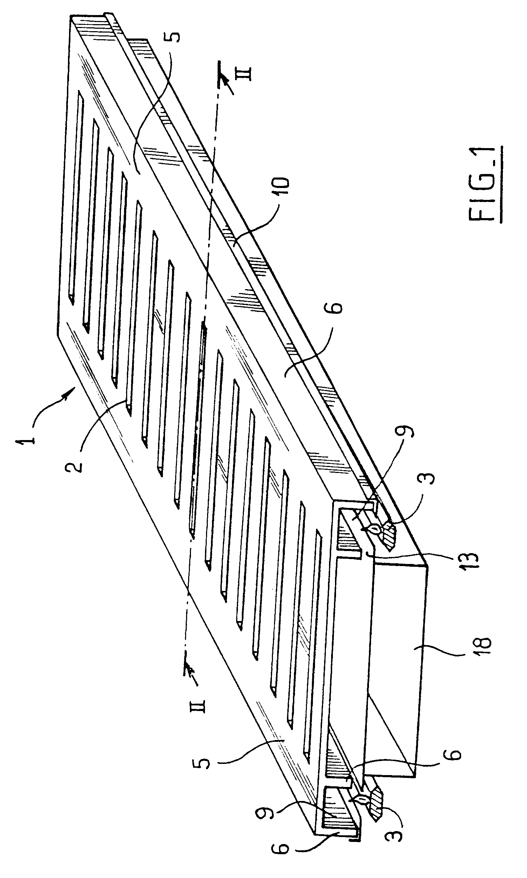

L'appareil de cuisson, tel qu'il est illustré à la figure 1, comporte une plaque de cuisson 1 réalisée en métal de forte épaisseur du type aluminium, acier ou fonte. Cette plaque 1 est pourvue d'ouvertures 2 constituées d'une série de fentes parallèles 2 qui s'étendent dans la largeur de l'appareil de cuisson. Ces fentes 2 traversent localement l'épaisseur de la plaque de cuisson 1 et débouchent sur sa face inférieure 8.

Ces fentes 2 sont disposées dans la zone de cuisson des aliments de la plaque de cuisson 1.

Des éléments chauffants 3 sont disposés sous la plaque de cuisson 1, dans la direction longitudinale de l'appareil, à la périphérie de la zone de cuisson.

Ces éléments chauffants 3 sont des rampes à gaz comportant une série de brûleurs.

Ces rampes à gaz sont fixées au corps de l'appareil et sont réunies à une extrémité de l'appareil pour être alimentées par une source de gaz unique (non représentée). De manière classique, un thermostat à gaz en liaison avec une sonde placée à proximité de la plaque de cuisson 1 permettent de réguler l'arrivée du gaz distribué aux brûleurs de manière à maintenir la plaque de cuisson 1 à la température désirée.

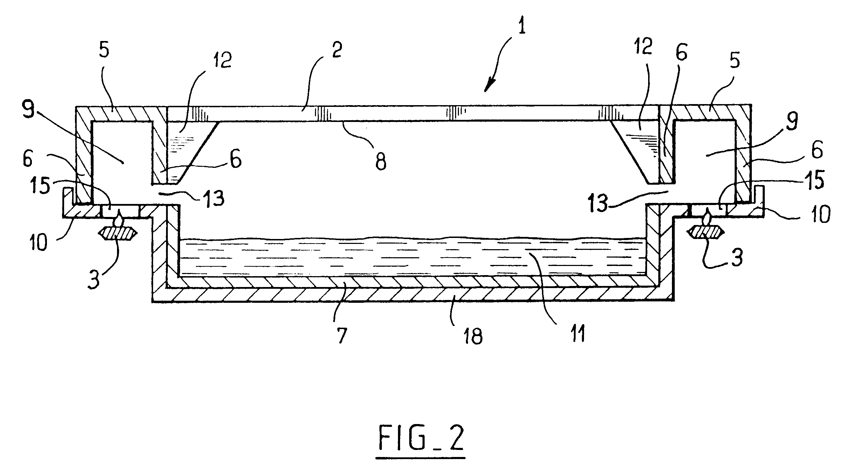

Comme représenté figure 2, un récipient de collecte 7 des graisses de cuisson est placé sous la zone de cuisson de la plaque de cuisson 1 à l'intérieur du socle 18 de l'appareil, c'est-à-dire sous les ouvertures 2.

De préférence, de l'eau 11 est versée dans le récipient de collecte 7 afin de refroidir les graisses fondues et d'éviter toute émission de fumées.

Le récipient de collecte 7 est interrompu à l'aplomb des logements 9 afin d'éviter une surchauffe de ce récipient 7 et une évaporation trop rapide de l'eau qu'il contient.

Comme les éléments chauffants 3 sont placés en dehors de la zone de cuisson, un récipient de collecte 7 unique et ininterrompu sur toute la zone de cuisson des aliments peut être utilisé.

Comme représenté à la figure 2, la face inférieure 8 de la plaque de cuisson 1 comporte des logements 9 de section transversale sensiblement en forme de "U" au-dessus des rampes à gaz 3. Les fentes 2 ne débouchent pas à l'intérieur du logement 9 mais au contraire, s'interrompent sur les portions 5 de la plaque de cuisson 1 qui sont adjacentes aux logements 9.

De préférence, la plaque de cuisson 1 et les logements 9 sont moulés d'une seule pièce. La base des logements 9 en forme de "U" est donc ainsi constituée par une portion 5 de la plaque de cuisson 1 qui ne comporte pas d'ouvertures 2.

De plus, les logements 9 reposent à leur partie inférieure sur des parois métalliques 10 qui sont distinctes des logements 9 et qui sont solidaires du socle 18. Ces parois 10 comportent une ouverture 15 qui s'étend sensiblement parallèlement aux rampes à gaz 3.

Ainsi, les rampes à gaz 3 sont à l'abri des graisses de cuisson qui s'écoulent par les fentes 2. Il n'y a donc pas de risques de pyrolyse des graisses et les aliments ne peuvent donc pas être pollués par des produits de pyrolyse.

La plaque de cuisson 1 est simplement posée sur ces parois métalliques 10. La plaque de cuisson 1 est donc amovible aisément et peut donc être séparée du reste de l'appareil et des brûleurs lorsque l'on procède au nettoyage de cette plaque.

Les logements 9 sont adjacents aux bords longitudinaux de la plaque de cuisson 1 et sont ainsi perpendiculaires à la série de fentes parallèles 2. Ces logements 9 reposent sur la paroi métallique 10 par l'intermédiaire de la paroi 6 des logements 9 qui est disposée à l'extérieur de l'appareil de cuisson. L'autre paroi 6 de chaque logement 9, disposée à l'intérieur de l'appareil de cuisson, s'interrompt légèrement au-dessus de la plaque métallique 10 de manière à créer une ouverture sur les côtés de l'appareil par laquelle une arrivée d'air secondaire est fournie aux brûleurs de la rampe à gaz 3.

De plus, l'air chaud des logements 9 s'échappe sous la plaque de cuisson 1.

Cet appareil de cuisson permet donc une cuisson améliorée des aliments par contact avec la plaque de cuisson 1 et par convection de l'air chaud à travers les fentes 2.

Comme représenté à la figure 2, la face inférieure 8 de la plaque de cuisson 1 comporte des nervures 12 s'étendant entre les parois 6 des logements 9 et la face inférieure 8 de la plaque de cuisson 1.

Ces nervures 12 permettent d'améliorer la conduction de la chaleur entre les logements 9, directement exposés aux flammes et la plaque de cuisson 1.

L'homogénéité de la température de la plaque de cuisson 1 est ainsi fortement améliorée, ce qui permet d'avoir une cuisson des aliments uniforme sur l'ensemble de la plaque de cuisson 1.

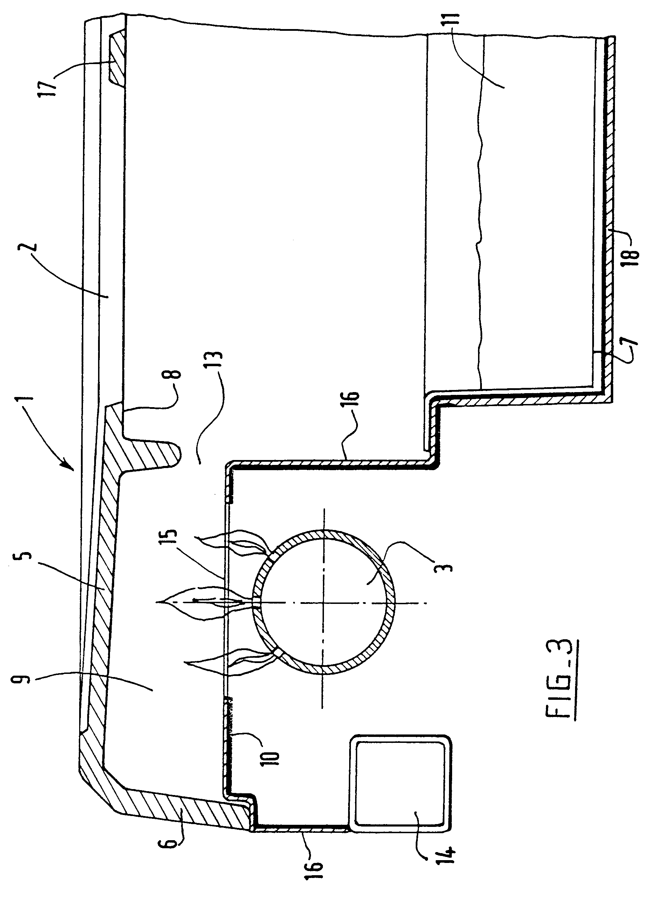

Comme représenté à la figure 3, la paroi métallique 10 comprend des ailes 16 entourant les rampes à gaz 3 de chaque côté de l'appareil. Ces ailes 16 jouent un rôle de protecteurs pour l'utilisateur à l'égard des rampes à gaz. De plus, ces ailes 16 s'étendant vers le bas et entourant les rampes à gaz 3 évitent toute perte de chaleur par les côtés de l'appareil et permettent de canaliser la chaleur dégagée dans les logements 9 en améliorant ainsi le rendement thermique de l'appareil.

Ces ailes 16 reposent sur la structure extérieure 14 de l'appareil qui est constituée de tubes 14 de section carrée.

Dans cette réalisation de l'invention, la plaque de cuisson 1 comporte des fentes transversales 2 qui sont interrompues au centre de l'appareil par des portions 17 de plaque.

De plus, les fentes 2 sont amorcées sur l'ensemble de la plaque de cuisson 1, bien qu'elles ne débouchent que sur des parties de la plaque 1 surplombant le récipient de collecte 7 des graisses. On obtient ainsi un dessin régulier sur la surface des aliments grillés sur la plaque 1.

Bien entendu, l'invention n'est pas limitée aux exemples de réalisation décrits ci-dessus, et de nombreuses modifications peuvent être apportées à ceux-ci sans sortir du cadre de l'invention.

Ainsi, la forme et la répartition des ouvertures 2 peuvent être quelconques.

Les logements 9 peuvent être réalisés séparément de la plaque de cuisson 1, puis fixés à celle-ci ultérieurement.

Les éléments chauffants 3 peuvent être des résistances électriques blindées tubulaires, qui doivent être placées à l'intérieur des logements 9, au-dessus de la paroi métallique 10, celle-ci ne comportant pas d'ouvertures 15. Cette paroi métallique 10 joue alors le rôle de réflecteur.

La paroi 6 des logements située à l'intérieur de la plaque de cuisson 1 peut reposer sur la majeure partie de sa longueur sur la paroi métallique 10 et comporter une série d'ouvertures réparties sur sa longueur.

La plaque de cuisson 1 peut également être en deux ou plusieurs parties.

## Revendications

1. Appareil de cuisson comportant une plaque de cuisson (1) métallique, amovible et pourvue d'ouvertures (2); des éléments chauffants (3) montés sous la plaque de cuisson et un récipient de collecte (7) des graisses de cuisson disposé sous la plaque de cuisson à l'intérieur du socle dudit appareil, la face inférieure (8) de la plaque de cuisson (1) comportant des logements (9) de section transversale sensiblement en forme de "U" au-dessus des éléments chauffants (3), lesdites ouvertures ne débouchant pas à l'intérieur des logements, caractérisé en ce que lesdits logements (9) reposent à leur partie inférieure sur une paroi métallique (10) distincte des logements (9) et sont adjacents aux bords de la plaque de cuisson, en ce que le récipient de collecte (7) est interrompu à l'aplomb des logements (9), et en ce que les éléments chauffants (3) sont disposés à proximité de la paroi métallique, cette paroi comportant des ailes s'étendant vers le bas et solidaires du socle.

2. Appareil de cuisson conforme à la revendication 1, caractérisé en ce que les éléments chauffants (3) sont montés sous la paroi métallique (10) et s'étendent dans la direction longitudinale de l'appareil, ladite paroi (10) comportant une ouverture (15) au-dessus des éléments chauffants (3).

3. Appareil de cuisson conforme à la revendication 2, caractérisé en ce que ladite paroi métallique (10) comprend des ailes (16) entourant les éléments chauffants (3).

4. Appareil de cuisson conforme à l'une des revendications 1 à 3, caractérisé en ce que les éléments chauffants (3) sont des rampes à gaz (3).

5. Appareil de cuisson conforme à l'une des revendications 1 à 4, caractérisé en ce que la plaque de cuisson (1) et le logement (9) sont moulés d'une seule pièce.

6. Appareil de cuisson conforme à l'une des revendications 1 à 5, caractérisé en ce que la face inférieure (8) de la plaque de cuisson (1) comporte en outre des nervures (12) s'étendant entre le logement (9) et la face inférieure (8) de la plaque de cuisson.

7. Appareil de cuisson conforme à l'une des revendications 1 à 6, caractérisé en ce que la plaque de cuisson, (1) comporte une série de fentes (2) parallèles formant des ouvertures (2) dans l'épaisseur de la plaque (1), lesdites fentes (2) s'interrompant sur les portions (5) de la plaque de cuisson (1) adjacentes aux logement (9).

8. Appareil de cuisson conforme à la revendication 7, caractérisé en ce qu'il comprend au moins une ouverture (13) entre ladite paroi métallique (10) et une paroi (6) desdits logements (9).

9. Appareil de cuisson conforme à l'une des revendications 1 à 8, caractérisé en ce que le récipient (7) adapté à recevoir les graisses contient de l'eau (11).

10. Appareil de cuisson conforme à la revendication 1, caractérisé en ce que les éléments chauffants (3) sont des résistances électriques.

## Claims

1. A cooking appliance comprising a detachable metal cooking plate (1) formed with apertures (2); heating elements (3) mounted beneath the cooking plate (1) and a receptacle (7) for collecting the fats from the cooking disposed beneath the cooking plate inside the base of the appliance, the bottom surface (8) of the cooking plate (1) comprising recesses (9) of substantially U-shaped cross-section above the heating elements (3), the said apertures (2) not leading to the interior of the recesses (9), characterised in that the said recesses (9) rest, at their bottom part, on a metal wall (10) which is separate from the recesses (9), and are adjacent the edges of the cooking plate, in that the collecting receptacle (7) is interrupted level with the recesses (9) and in that the heating elements (3) are disposed near the metal wall, said wall comprising flanges extending downwards and secured to the base.

2. A cooking appliance according to claim 1, characterised in that the heating elements (3) are mounted beneath the metal wall (10) and extend in the longitudinal direction of the appliance, said wall (10) being formed with an aperture (15) above the heating elements (3).

3. A cooking appliance according to claim 2, characterised in that the said metal wall (10) has flanges (16) surrounding the heating elements (3).

4. A cooking appliance according to any one of claims 1 to 3, characterised in that the heating elements (3) are gas burners (3).

5. A cooking appliance according to any one of claims 1 to 4, characterised in that the cooking plate (1) and the recess (9) are moulded in one piece.

6. A cooking appliance according to any one of claims 1 to 5, characterised in that the bottom surface (8) of the cooking plate (1) also has ribs (12) extending between the recess (9) and the bottom surface (8) of the cooking plate (1).

7. A cooking appliance according to any one of claims 1 to 6, characterised in that the cooking plate (1) is formed with a series of parallel slots (2) forming apertures (2) in the thickness of the plate (1), said slots (2) being interrupted on the portions (5) of the cooking plate (1) adjacent the recesses (9).

8. A cooking appliance according to claim 7, characterised in that it comprises at least one aperture (13) between the said metal wall (10) and a wall (6) of said recesses (9).

9. A cooking appliance according to any one of claims 1 to 8, characterised in that the receptacle (7) adapted to receive the fats contains water (11).

10. A cooking appliance according to claim 1, characterised in that the heating elements (3) are electrical resistances.

## Patentansprüche

1. Kochgerät mit einer abnehmbaren und mit Öffnungen (2) versehenen Metallkochplatte (1); mit unter der Kochplatte angebrachten Heizelementen (3) und einem unter der Kochplatte im Innern der Grundplatte des Geräts vorgesehenen Sammelgefäß (7) für Kochfette, wobei die Unterseite (8) der Kochplatte (1) über den Heizelementen (3) Kammern (9) mit im wesentlichen U-förmigem Querschnitt aufweist, wobei die Öffnungen nicht in die Kammern einmünden, dadurch gekennzeichnet, daß die Kammern (9) mit ihrem unteren Abschnitt auf einer von den Kammern (9) getrennten Metallwand (10) ruhen und im Randbereich der Kochplatte liegen, daß das Sammelgefäß (7) unterhalb des Ansatzes der Kammern (9) endet, und daß die Heizelemente (3) in der Nähe der Metallwand angeordnet sind, wobei diese Wand Schenkel aufweist, die sich einstückig mit der Grundplatte nach unten erstrecken.

2. Kochgerät nach Anspruch 1, dadurch gekennzeichnet, daß die Heizelemente (3) unter der Metallwand (10) angebracht sind und sich in Langsrichtung des Geräts erstrecken, wobei die Wand (10) über den Heizelementen (3) eine Öffnung (15) aufweist.

3. Kochgerät nach Anspruch 2, dadurch gekennzeichnet, daß die Metallwand (10) Schenkel (16) umfaßt, die die Heizelemente (3) umgeben.

4. Kochgerät nach einem der Ansprüche 1 bis 3, dadurch gekennzeichnet, daß die Heizelemente (3) Gasbrennerröhren (3) sind.

5. Kochgerät nach einem der Ansprüche 1 bis 4, dadurch gekennzeichnet, daß die Kochplatte (1) und die Kammer (9) einstückig geformt sind.

6. Kochgerät nach einem der Ansprüche 1 bis 5, dadurch gekennzeichnet, daß die Unterseite (8) der Kochplatte (1) weiterhin Rippen (12) aufweist, die sich zwischen der Kammer (9) und der Unterseite (8) der Kochplatte erstrecken.

7. Kochgerät nach einem der Ansprüche 1 bis 6, dadurch gekennzeichnet, daß die Kochplatte (1) eine Reihe von parallelen Schlitzen (2) umfaßt, die in der Dicke der Platte (1) Öffnungen bilden, wobei die Schlitze (2) an den zu den Kammern (9) benachbarten Abschnitten (5) der Kochplatte (1) enden.

8. Kochgerät nach Anspruch 1, dadurch gekennzeichnet, daß es zwischen der Metallwand (10) und einer Wand (6) der Kammern (9) wenigstens eine Öffnung (13) umfaßt.

9. Kochgerät nach einem der Ansprüche 1 bis 8, dadurch gekennzeichnet, daß das zum Aufnehmen der Fette geeignete Gefäß (7) Wasser (11) enthält.

10. Kochgerät nach Anspruch 1, dadurch gekennzeichnet, daß die Heizelemente (3) elektrische Heizwiderstände sind.
